# EUROPÄISCHE PATENTSCHRIFT

(11) **EP 3 498 531 B1**
(45) Veröffentlichungstag und Bekanntmachung des Hinweises auf die Patenterteilung: **07.06.2023**
(21) Anmeldenummer: 18211956.0
(22) Anmeldetag: 12.12.2018
(51) Int. Cl.: B60N 2/90, B60N 2/24, B60N 2/02

(54) **VORRICHTUNG, INSBESONDERE SITZSCHALE, MIT MEHREREN BEWEGLICHEN VERSTELLELEMENTEN**
DEVICE, IN PARTICULAR SEAT SHELL, WITH A PLURALITY OF MOBILE ADJUSTMENT ELEMENTS
DISPOSITIF, EN PARTICULIER COQUE DE SIÈGE, POURVU D'UNE PLURALITÉ D'ÉLÉMENTS DE RÉGLAGE MOBILES

(30) Priorität: 18.12.2017 DE 102017130409
(43) Veröffentlichungstag der Anmeldung: 19.06.2019
(73) Patentinhaber: Interco Group GmbH, 53783 Eitorf (DE)
(72) Erfinder: Markwald, Michael, 53783 Eitorf (DE)
(74) Vertreter: Freischem & Partner Patentanwälte mbB

(56) Entgegenhaltungen:
- EP-A2- 0 186 203
- EP-A2- 1 116 625
- DE-A1- 2 134 325
- DE-A1-102012 223 791
- FR-A5- 2 097 577
- KR-A- 20140 068 680
- US-A1- 2008 018 152

## Beschreibung

Die Erfindung betrifft eine Vorrichtung mit mehreren beweglichen Verstellelementen, welche separat voneinander verstellbar und jeweils in einer gewünschten Position arretierbar sind.

Vorrichtungen der in Rede stehenden Art finden auf einer Vielzahl an technischen Gebieten Verwendung. Sie dienen dazu, Elemente jeglicher Art in ihrer Position zueinander verstellbar zu gestalten und in ihrer jeweils gewünschten Position festzulegen.

Bei der Bedienung einer derartigen Vorrichtung nach dem Stand der Technik ist es notwendig, zur Verstellung mehrerer beweglicher Verstellelemente jedes der zu verstellenden Verstellelemente zunächst zu entriegeln, es anschließend zu verstellen und dann jedes einzelne Verstellelement zu arretieren. Dies ist verhältnismäßig umständlich.

Die Druckschrift DE 21 34 325 A beschreibt einen Fahrzeugsitz mit einem Sitzteil und einer Rückenlehne mit seitlichen Rändern und mit verstellbaren Teilen, die entgegen einer von einem elastischen Glied ausgeübten Kraft um Achsen verschwenkbar sind, die zu den Rändern des Sitzteiles und der Rückenlehne parallel verlaufen. Jedes verstellbare Teil des Sitzteiles und der Rückenlehne ist mit einem Gleitbeschlag verbunden, der zwischen einer feststehenden Klemmplatte und einer beweglichen Klemmplatte angeordnet ist, wobei, letztere mit einer Betätigungsvorrichtung verbunden ist.

Auch die Druckschrift DE 10 2012 223 791 A1 beschreibt einen Fahrzeugsitz mit mehreren beweglichen Verstellelementen, die separat voneinander verstellbar und jeweils in einer gewünschten Position arretierbar sind. Bei den Verstellelementen handelt es sich um Schienen, die eine Längsverschiebung und Querverschiebung des Fahrzeugsitzes ermöglichen. Den Verstellelementen sind Verriegelungselemente mit Fingern zugeordnet, die in der Verriegelungsposition Löcher in den Schienen durchragen. Mit einem Schiebeentriegelungshebel kann zuerst der Längsverschiebemechanismus und dann der Querverriegelungsmechanismus entriegelt und bei umgekehrter Bewegung wieder verriegelt werden.

Der Erfindung liegt die Aufgabe zugrunde, eine Vorrichtung mit mehreren beweglichen Verstellelementen aufzuzeigen, die sich in einfacher Weise bedienen lässt.

Die Aufgabe wird gelöst durch eine Vorrichtung mit den Merkmalen des Anspruchs 1. Die Merkmale der abhängigen Ansprüche betreffen vorteilhafte Ausführungsformen.

Erfindungsgemäß ist jedem Verstellelement mindestens ein Verriegelungselement zugeordnet. Hierbei kann jedes Verriegelungselement einem einzigen Verstellelement zugeordnet sein. Es ist jedoch auch möglich, dass ein Verriegelungselement mehreren Verstellelementen zugeordnet ist.

Verstellelement und zugeordnetes Verriegelungselement weisen einander gegenüberliegende gezahnte Oberflächen auf. Die einzelnen Zähne und/oder die Bereiche zwischen den einzelnen Zähnen können dabei abgerundet sein, so dass der Begriff *"gezahnte Oberfläche"* auch einen wellenförmigen Oberflächenverlauf umfasst. Die gezahnten Oberflächen weisen einen zueinander komplementären Verlauf auf, so dass sie ineinander eingreifen, wenn sie gegeneinander gedrückt werden. Die Zähne der einen Oberfläche liegen dabei in den Tälern oder Lücken der Zähne der anderen, komplementär gezahnten Oberfläche. Auf diese Weise wird eine Relativbewegung der gezahnten Oberflächen zueinander quer zu den Zähnen verhindert.

Verstellelement und Verriegelungselement sind relativ zueinander bewegbar, insbesondere in Richtung der Erstreckung der Zähne verschiebbar. Sie können von einer Verriegelungsposition, in der die gezahnten Oberflächen gegeneinander anliegen, in eine Entriegelungsposition, in der die gezahnten Oberflächen einen Abstand zueinander aufweisen, relativ zueinander bewegt werden. Hierbei wird durch die Bewegung in die Verriegelungsposition die Arretierung der beweglichen Verstellelemente herbeigeführt. Durch die Bewegung in die Entriegelungsposition wird die Arretierung der beweglichen Verstellelemente gelöst und die Verstellelemente können quer zu den Zähnen verschoben werden.

Erfindungsgemäß ist ein Kraftübertragungselement vorgesehen. Das Kraftübertragungselement bewirkt die Relativbewegung zwischen allen Verstellelementen und den zugeordneten Verriegelungselementen von der Verriegelungsposition in die Entriegelungsposition und zurück. Auf diese Weise bewirkt das Kraftübertragungselement, dass sämtliche Verstellelemente relativ zu dem jeweils zugeordneten Verriegelungselement gleichzeitig in die Verriegelungsposition und/oder die Entriegelungsposition bewegt werden können. Dies ermöglicht das gleichzeitige Arretieren und/oder das gleichzeitige Lösen der Arretierung sämtlicher beweglicher Verstellelemente.

Die Verstellelemente können in der Praxis entlang einer Geraden verschoben werden. Es ist möglich, dass alle Verstellelemente parallel zueinander verstellbar sind. Die einzelnen Verstellelemente können allerdings auch in unterschiedliche Richtungen verstellbar sein. Auch kann es sich bei der Verstellbewegung eines Verstellelements um eine Dreh- oder Schwenkbewegung handeln. In diesen Fällen können die gezahnten Oberflächen zweckmäßigerweise eine Krümmung aufweisen, insbesondere als Zahnkränze oder Zahnkranzsegmente ausgebildet sein. Kombinationen aus geradlinigen Verstellbewegungen und Dreh- oder Schwenkbewegungen sind ebenfalls möglich.

Das Kraftübertragungselement kann ein Gewinde aufweisen, mit dem seine Position verstellbar ist. Ein Gewinde erlaubt eine bedienerfreundliche Verstellung der Position des Kraftübertragungselements, da durch das Gewinde mit einem geringen Kraftaufwand die Verstellung der Position des Kraftübertragungselements realisiert und eine große Andrückkraft zwischen den gezahnten Oberflächen erzeugt werden kann.

Die Vorrichtung weist mindestens ein Halteelement auf. Das Halteelement ist mindestens einem Verstellelement zugeordnet und übt in der Entriegelungsposition auf das zugeordnete Verstellelement eine Haltekraft aus, die zum Verstellen dieses Verstellelements überwunden werden muss. Hierdurch wird die Bedienung der erfindungsgemäßen Vorrichtung vereinfacht. Das Halteelement sorgt dafür, dass sich das zugeordnete Verstellelement bei gelöster Arretierung nicht ungewollt verstellt. Auf diese Weise wird sichergestellt, dass das Verstellelement - beispielsweise während ein anderes Verstellelement verstellt und so in seine gewünschte Position gebracht wird - in seiner Position verbleibt.

In der Praxis kann das Halteelemente so ausgebildet sein, dass es das Verstellelement mit seiner Haltekraft gegenüber dem zugeordneten Verriegelungselement derart ausrichtet, dass die gezahnten Oberflächen ohne eine weitere Verstellbewegung des Verstellelements in Eingriff gelangen können. Mit anderen Worten hält das Halteelement das zugeordnete Verstellelement in einer Position, in der seine gezahnte Oberfläche zu der gezahnten Oberfläche des Verriegelungselements derart ausgerichtet ist, dass jeweils ein Zahn der einen Oberfläche einem Tal oder Zwischenraum zwischen zwei Zähnen der komplementären Oberfläche gegenüberliegt. Beim Verlagern in die Verriegelungsposition, welches bevorzugt in Richtung der Erstreckung der Zähne erfolgt, fügen sich die Zähne in die gegenüberliegenden Täler ohne eine seitliche Verlagerung bzw. seitliche Verstellbewegung des Verstellelements. Auf diese Weise entspricht die durch das Halteelement vorgegebene Position des Verstellelements jener Position, in der das Verstellelement auch arretierbar ist.

Das Halteelement kann eine gezahnte Oberfläche aufweisen, die einem Abschnitt der gezahnten Oberfläche des zugeordneten Verstellelements gegenüberliegt. Auf diese Weise lässt sich die gezahnte Oberfläche des zugeordneten Verstellelements neben der Arretierfunktion gleichzeitig für die Einleitung der Haltekraft in das zugeordnete Verstellelement nutzen. Darüber hinaus ermöglicht die Nutzung der gleichen Verzahnung für die Verriegelung wie für das Halten in der Entriegelungsposition in einfacher Weise, dass das Halteelement die Zähne der Oberfläche des Verstellelements zur komplementär gezahnten Oberfläche des Verriegelungselements ausrichtet.

Jedes Halteelement kann gegen die Kraft einer Feder verschiebbar befestigt sein. Durch eine derartige Befestigung des Halteelements lässt sich die Ausübung einer Haltekraft auf das Verstellelement in einfacher und zuverlässiger Weise realisieren. Insbesondere kann jedes Halteelement ein in Richtung der Erstreckung der Zähne verschiebbar am Verriegelungselement geführtes Segment sein, welches einen gezahnten Oberflächenabschnitt aufweist, der einen Teil der gezahnten Oberfläche des Verriegelungselements bildet. Mit anderen Worten ist das Halteelement ein gegen eine Federkraft verschiebbares Segment des Verriegelungselements, das einen Teilabschnitt seiner gezahnten Oberfläche bildet. Die Feder bewirkt, dass das Halteelement in Eingriff mit der gezahnten Oberfläche des Verstellelements bleibt. Die gegeneinander anliegenden Zähne der gezahnten Oberfläche weisen schräge Zahnflanken auf. Beim Aufbringen einer Verstellkraft auf das Verstellelement wird das Halteelement gegen die Federkraft in Richtung der Erstreckung der Zähne von der gezahnten Oberfläche des Verstellelements fort gedrückt, bis die Zahnspitzen aneinander vorbei gleiten und die Zähne des Halteelements in das benachbarte Tal oder den benachbarten Zwischenraum zwischen zwei Zähnen des Verstellelements gedrückt werden. Folglich ist eine Verstellung des Verstellelements in Schritten erforderlich, die der Teilung der gezahnten Oberflächen entspricht. Ist eine Verstellung in großen Schritten gewünscht, sind große Zähne an den gezahnten Oberflächen vorzusehen. Wenn dagegen eine feine Positionseinstellung gewünscht ist, weisen die gezahnten Oberflächen kleine Zähne mit kleiner Zahnteilung auf.

Wie erwähnt, kann das Halteelement an einem Verriegelungselement befestigt sein. Hierbei können Halteelement und Verriegelungselement in der Praxis demselben Verstellelement zugeordnet sein.

Die Vorrichtung kann Bestandteil einer Sitzschale sein. Unter einer Sitzschale ist insbesondere die Gesamtheit der starren Elemente eines Sitzes zu verstehen, die diesem seine Form verleihen. Insbesondere sind verstellbare Sitzschalen zur Aufnahme körperlich behinderter Personen für den Einsatz der hier beschriebenen Vorrichtung vorgesehen, wie sie beispielsweise auf Rollstühlen oder Therapiestühlen zum Einsatz kommen. Personen mit Fehlstellungen der Gelenke oder der Körperteile oder Personen, die unter Streckkrämpfen leiden, erfordern eine sehr präzise Anpassung der Form der Sitzschale, in der sie aufgenommen werden. Die Form der Sitzschale muss genau auf die Größe der Person angepasst werden und häufig von einer symmetrischen Ausbildung abweichen, weil Fehlbildungen durchaus asymmetrisch auftreten und bei der Sitzschalenform berücksichtigt werden müssen.

An einem Verstellelement kann beispielsweise ein seitliches Führungselement für eine in der Sitzschale aufgenommene Person befestigt sein. Mit der erfindungsgemäßen Vorrichtung ist es dann beispielsweise möglich, derartige seitliche Führungselemente auf beiden Seiten der Sitzschale individuell zu verstellen und in der gewünschten Position durch einen einzigen Bedienvorgang gleichzeitig zu arretieren und/oder die Arretierung zu lösen. Eine derartige Sitzschale kann beispielsweise vier Verstellelemente aufweisen, zwei auf jeder Seite. Bisher war die Verstellung derartiger Verstellelemente praktisch nur bei der leeren Sitzschale möglich. Für jedes Verstellelement war die Arretierung zu lösen, die gewünschte Position einzustellen und anschließend die Arretierung wieder festzulegen. Die hier beschriebene Vorrichtung ermöglicht es, die Verstellung bei in der Sitzschale aufgenommener Person durchzuführen. Dazu setzt sich die Person bei gelöstem Halteelement in die Sitzschale mit entriegelten Verriegelungselementen und den Verstellelementen in den äußersten Positionen, in denen die Sitzschale die maximale Größe aufweist. Wenn die Person die optimale Sitzposition eingenommen hat, werden die Verstellelemente nacheinander derart verstellt, dass die seitlichen Führungen mit der gewünschten Kraft gegen den Körper der aufgenommenen Person anliegen und ihm Halt geben. Ein Herausschieben der Verstellelemente aus der einmal eingestellten Position wird durch die Halteelemente verhindert.

Die Sitzschale kann eine Auflageplatte für die Sitzpolsterung aufweisen. Unter der Auflageplatte für die Sitzpolsterung kann mindestens ein Verstellelement angeordnet sein. In der Praxis können alle Verstellelemente unter der Auflageplatte für die Sitzpolsterung angeordnet sind.

Alternativ und/oder ergänzend kann mindestens ein Verriegelungselement, bevorzugt alle Verriegelungselemente unter der Auflageplatte für die Sitzpolsterung angeordnet sein.

Alternativ und/oder ergänzend kann bzw. können mindestens ein Halteelement und vorzugsweise alle Halteelemente unter der Auflageplatte für die Sitzpolsterung angeordnet sein.

Auch die Feder oder Federn können unter der Auflageplatte für die Sitzpolsterung angeordnet sein.

Die Sitzschale kann eine Basisplatte aufweisen, die in der Praxis unterhalb der Auflageplatte angeordnet ist. Die Basisplatte bietet eine Auflagefläche für die verschiebbaren Verriegelungselemente, das Kraftübertragungselement und die Halteelemente. Die Verriegelungselemente können an der Basisplatte befestigt sein. Die Basisplatte nimmt folglich die Kräfte auf, mit denen das Kraftübertragungselement die Verstellelemente und die Verriegelungselemente gegeneinander drückt. Sie nimmt auch die seitlich auf die gezahnte Oberfläche wirkenden Kräfte auf und hält so die Verstellelemente in ihrer eingestellten Position.

Alternativ und/oder ergänzend können die Verriegelungselemente auch an dem Kraftübertragungselement angeordnet bzw. befestigt sein. In diesem Fall weist die Basisplatte einfache Anschläge auf, welche die Verstellelemente in Längsrichtung arretieren und in Querrichtung führen. In diesem Fall werden die am Kraftübertragungselement angeordneten Verriegelungselemente mit ihren gezahnten Oberflächen gegen die gezahnten Oberflächen der Verstellelemente gedrückt, die wiederum gegen an der Basisplatte angeordnete Anschläge gedrückt werden.

Schließlich ist es auch möglich, dass Widerlagerelemente und Verriegelungselemente einander gegenüberliegende gezahnte Oberflächen aufweisen, die jeweils mit gezahnten Oberflächen der Verstellelemente zusammenwirken. So werden die Verstellelemente von beiden Seiten über gezahnte Oberflächen gehalten.

Zwischen der Auflageplatte und einem Verstellelement kann die Sitzschale ein Gleitelement aufweisen. Mit einem derartigen Gleitelement kann ein etwaiges Spiel des Verstellelements beseitigt oder zumindest reduziert werden. Darüber hinaus kann ein Gleitelement die Verstellung des Verstellelements vereinfachen, indem die Reibung des Verstellelements bei dessen Verstellung reduziert wird. Das Gleitelement kann aus reibungsarmem Kunststoff bestehen.

Weitere praktische Ausführungsformen und Vorteile der Erfindung sind nachfolgend im Zusammenhang mit den Zeichnungen beschrieben.
- Fig. 1: zeigt eine schematische dreidimensionale Darstellung einer beispielhaften erfindungsgemäßen Vorrichtung.
- Fig. 2: zeigt eine der Fig. 1 entsprechende Darstellung, bei der die Verriegelungselemente freigelegt sind.
- Fig. 3: zeigt eine vergrößerte Detaildarstellung eines Teils der Vorrichtung aus Fig. 1.
- Fig. 4: zeigt eine dreidimensionale Darstellung einer Sitzschale mit der Vorrichtung aus Fig. 1.
- Fig. 5 und 6: zeigen eine dreidimensionale Darstellung und eine Draufsicht der Sitzschale aus Fig. 4 mit aufgespreizten vorderen Verstellelementen.
- Fig. 7 und 8: zeigen eine dreidimensionale Darstellung und eine Draufsicht der Sitzschale aus den Fig. 4 bis 6 mit asymmetrisch verstellten vorderen Verstellelementen.

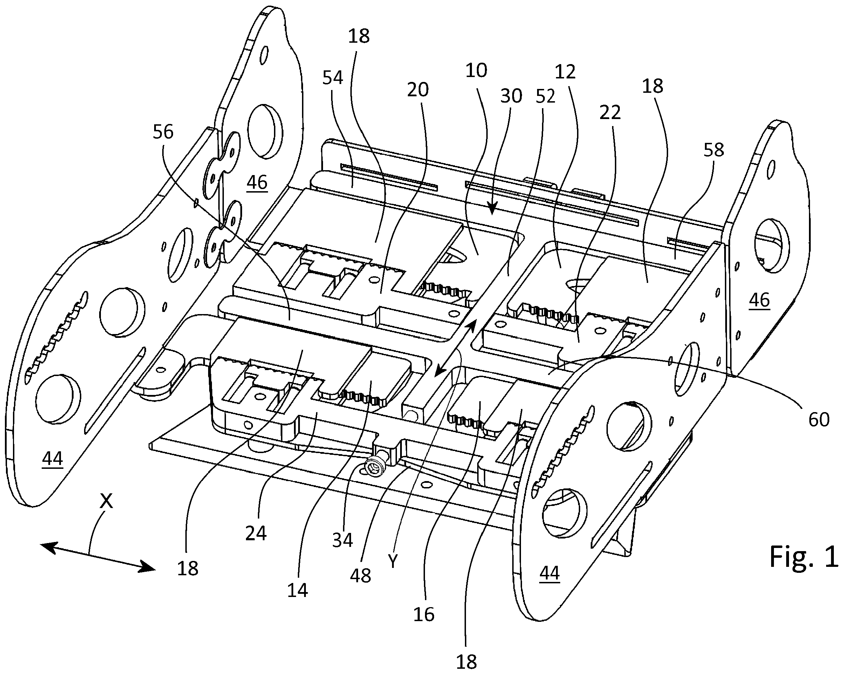

Die in den Zeichnungen dargestellte Vorrichtung weist vier Verstellelemente 10, 12, 14 und 16 auf. Die Verstellelemente 10, 12, 14 und 16 sind separat voneinander verstellbar und in der dargestellten Ausführungsform als verschiebbare Platten ausgebildet. Im gezeigten Beispiel kann die Verstellung der Verstellelemente 10, 12, 14, und 16 entlang einer quer verlaufenden Verstellrichtung X erfolgen. Die Verstellelemente 10, 12, 14 und 16 sind hierfür entsprechend geführt. Der Führung der Verstellelemente 10, 12, 14 und 16 dienen im gezeigten Beispiel unter anderem die Gleitelemente 18, die in der Fig. 1 dargestellt sind und von dünnen rechteckigen Platten aus reibungsarmem Kunststoff gebildet werden. Die Gleitelemente 18 sorgen dafür, dass die Verstellelemente 10, 12, 14 und 16 mit geringem Spiel in der in Fig. 1 von oben nach unten verlaufenden vertikalen Richtung geführt sind. In der Längsrichtung sind die Verstellelemente 10, 12, 14 und 16 durch andere, nachfolgend beschriebene Bauelemente fixiert. Allein in der Querrichtung haben die Verstellelemente 10, 12, 14 und 16 im entriegelten Zustand eine Bewegungsfreiheit.

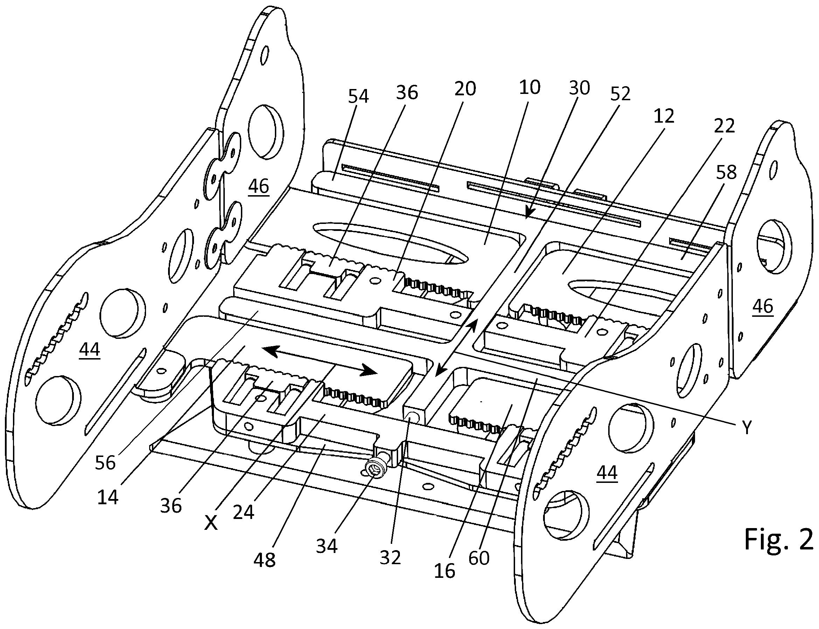

In der Fig. 2 sind die Gleitelemente 18 nicht dargestellt, um eine bessere Sichtbarkeit der Verstellelemente 10, 12, 14 und 16 zu ermöglichen.

Im gezeigten Beispiel sind die Verstellelemente 10, 12, 14 und 16 als lineare Verstellelemente 10, 12, 14 und 16 dargestellt. Alternativ und/oder ergänzend ist es jedoch auch möglich, dass die Verstellelemente 10, 12, 14 und 16 bei ihrer Verstellung andere als gradlinige bzw. lineare Bewegungen ausführen. Insbesondere kann es sich auch um Schwenk und/oder Drehbewegungen handeln. Auch müssen die Verstellrichtungen der einzelnen Verstellelemente 10, 12, 14 und 16 nicht zwingend parallel zueinander orientiert sein, wie es im Darstellungsbeispiel gezeigt ist.

Jedem der Verstellelemente 10, 12, 14 und 16 ist ein Verriegelungselement 20, 22 und 24 zugeordnet. Im gezeigten Beispiel ist das Verriegelungselement 20 dem Verstellelement 10 und das Verriegelungselement 22 dem Verstellelement 12 zugeordnet. Das Verriegelungselement 24 ist im gezeigten Beispiel den Verstellelementen 14 und 16 zugeordnet.

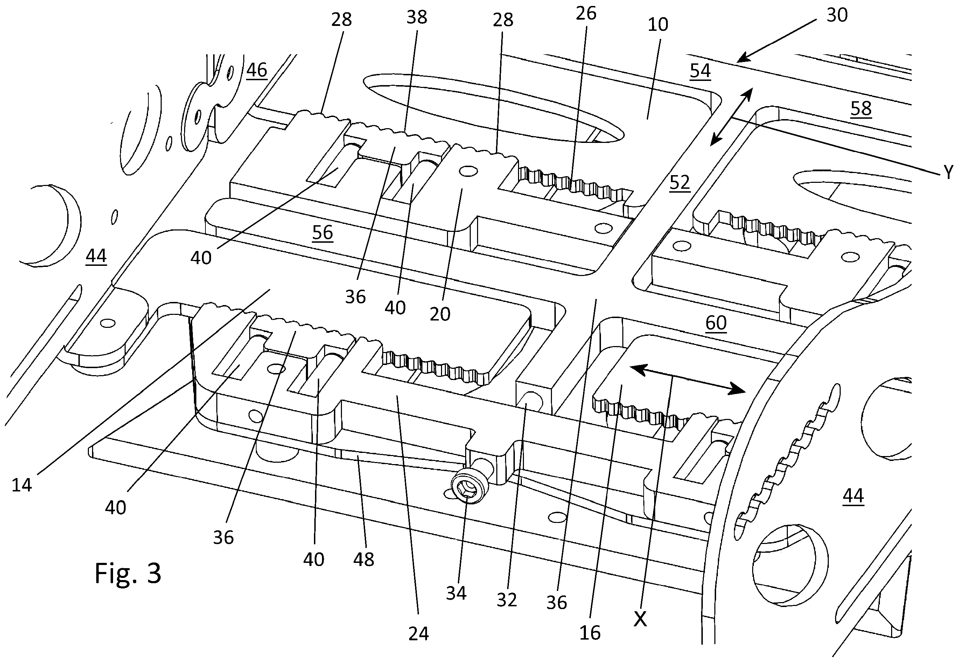

Die Verstellelemente 10, 12, 14 und 16 weisen jeweils eine gezahnte Oberfläche 26 auf. Die Verriegelungselemente 20, 22 und 24 weisen ebenfalls jeweils gezahnte Oberflächen 28 auf. Die gezahnten Oberflächen 26 und 28 der jeweils einander zugeordneten Verstellelemente 10 und Verriegelungselemente 20 liegen einander gegenüber und greifen im verriegelten Zustand ineinander ein. Aus Gründen der Übersichtlichkeit sind in Fig. 3 nur die gezahnten Oberflächen 26 des hinteren rechten Verstellelements 10 und die damit zusammenwirkenden gezahnten Oberflächen 28, 38 mit Bezugszeichen versehen. Die gezahnten Oberflächen der anderen Verstellelemente 12, 14 und 16 sind analog ausgebildet.

Jedes der Verstellelemente 10, 12, 14 und 16 ist im entriegelten Zustand relativ zu dem ihm jeweils zugeordneten Verriegelungselement 20, 22 und 24 entlang einer Verriegelungsrichtung Y bewegbar. Die Verriegelungsrichtung Y verläuft längs und somit orthogonal zur in Querrichtung verlaufenden Verstellrichtung X. Die Bewegbarkeit wird kann dadurch erzielt werden, dass eine Klemmkraft, die das Verstellelement 10, 12, 14 und 16 gegen das Verriegelungselement 20, 22 und 24 drückt, wie nachfolgend beschrieben, aufgehoben werden kann. Alternativ und/oder ergänzend zur Bewegungsfreiheit der 10, 12, 14 und 16 ist es aber auch möglich, dass die Verriegelungselemente 20, 22 und 24 in der Verriegelungsrichtung Y bewegbar gestaltet sind, um die Relativbewegung zwischen den Verstellelementen 10, 12, 14 und 16 und den jeweils zugeordneten Verriegelungselementen 20, 22 und 24 zu ermöglichen.

Durch diese Relativbewegung können die Verstellelemente 10, 12, 14 und 16 und die Verriegelungselemente 20, 22 und 24 von einer Verriegelungsposition, in der die jeweiligen gezahnten Oberflächen 26 und 28 aneinander anliegen, in eine Entriegelungsposition bewegt werden, in der die jeweiligen gezahnten Oberflächen 26 und 28 einen Abstand zueinander aufweisen. Der Abstand ist im entriegelten Zustand mindestens so groß, dass sich die gezahnten Oberflächen 26 und 28 entlang der Verstellrichtung X der Verstellelemente 10, 12, 14 und 16 aneinander vorbei bewegen können.

Die Verriegelungsrichtung Y kann - wie im gezeigten Beispiel - senkrecht zur Verstellrichtung X orientiert sein. Im gezeigten Beispiel sind die Verriegelungsrichtungen Y der einzelnen Verstellelemente 10, 12, 14 und 16 parallel zueinander orientiert. Alternativ und/oder ergänzend können die einzelnen Verriegelungsrichtungen Y jedoch auch unterschiedlich orientiert sein. Auch können die Verriegelungsbewegungen abweichend vom gezeigten Beispiel Dreh- oder Schwenkbewegungen sein.

Die Relativbewegungen zwischen den Verstellelementen 10, 12, 14 und 16 und den jeweils zugeordneten Verriegelungselementen 20, 22 und 24 in der jeweiligen Verriegelungsrichtung Y wird durch ein Kraftübertragungselement 30 bewirkt. Das Kraftübertragungselement 30 ist hierfür in seiner Position verstellbar. Die Verstellung der Position des Kraftübertragungselements 30 erfolgt im gezeigten Beispiel entlang der gemeinsamen Verriegelungsrichtung Y der Verstellelemente 10, 12, 14 und 16. Im Falle von unterschiedlichen Verriegelungsrichtungen kann das Kraftübertragungselement 30 z. B. mehrere über Gelenke miteinander verbundene Abschnitte aufweisen.

Im gezeigten Beispiel erfolgt die Verstellung der Position des Kraftübertragungselements 30 durch ein Gewinde 32. Die für die Verstellung notwendige Drehung des Gewindes 32 kann im gezeigten Beispiel manuell durch eine Betätigungsschraube 34 erfolgen. Die Betätigungsschraube 34 weist in der gezeigten Ausführungsform beispielhaft einen Innensechskant-Schraubenkopf auf.

Das Kraftübertragungselement 30 liegt auf einer Basisplatte 48 auf und ist in deren Längsrichtung, welche der Verriegelungsrichtung Y entspricht, verschiebbar. Ebenfalls liegen die Verstellelemente 10, 12, 14 und 16 auf der Basisplatte 48 auf und sind in deren Querrichtung verschiebbar, welche der Verstellrichtung X entspricht. Das Kraftübertragungselement 30 weist im vorliegenden Fall einen Längssteg 52 auf, in den die Betätigungsschraube 34 eingreift. Das Kraftübertragungselement 30 weist ferner zu beiden Seiten des Längsstegs 52 zwei Querstege 54, 56 bzw. 58, 60 auf, deren zur Betätigungsschraube 34 hin gerichtete Seite eine glatte Anlagefläche für jeweils ein Verstellelement 10, 12, 14 und 16 bildet. Wenn die Betätigungsschraube 34 angezogen ist, drückt sie die Verstellelemente 10, 12, 14 und 16 gegen die Verriegelungselemente 20, 22, 24. Dabei greifen die gezahnten Oberflächen 26 der Verstellelemente 10, 12, 14 und 16 in die komplementär gezahnten gegenüberliegenden Oberflächen 28 der Verriegelungselemente 20, 22, 24 ein und verhindern ein seitliches Verschieben der Verstellelemente 10, 12, 14, 16. Die Verriegelungselemente 20, 22, 24 sind auf der Basisplatte 48 befestigt, z.B. vernietet oder verschraubt.

Das Widerlager für die Betätigungsschraube 34 ist in der Mitte des vorderen Verriegelungselements 24 angeordnet. Wenn die Betätigungsschraube 34 gelöst wird, wird das Kraftübertragungselement 30 von dem vorderen Verriegelungselement 24 fort nach hinten verschoben, so dass der Abstand zwischen den vorderen Querstegen 56 des Kraftübertragungselements 30 und dem vorderen Verriegelungselement 24 sowie zwischen den hinteren Querstegen 54, 58 und den hinteren Verriegelungselementen 20, 22 größer wird. Wenn der Abstand groß genug ist, können die Verstellelemente 10, 12, 14 und 16 seitlich verschoben werden, ohne dass die gezahnte Oberfläche 26 der Verstellelemente 10, 12, 14 und 16 in die gezahnten Oberflächen 28 der Verriegelungselemente 20, 22, 24 eingreifen. Diese Position des Kraftübertragungselements 30 und die sich daraus ergebende Relativposition zwischen Verstellelement 10, 12, 14, 16 und Verriegelungselement 20, 22, 24 ist die Entriegelungsposition.

Den Verstellelementen 10, 12, 14 und 16 sind jeweils Halteelemente 36 zugeordnet sein. Die Halteelemente 36 sind in Unterbrechungen der gezahnten Oberflächen 28 der Verriegelungselemente 20, 22, 24 in Verriegelungsrichtung Y verschiebbar aufgenommen und stützen sich über Federn 40 gegen die Verriegelungselemente 20, 22, 24 ab. Jedes der Halteelemente 36 übt in der Entriegelungsposition eine Haltekraft auf das dem jeweiligen Halteelement 36 zugeordnete Verstellelement 10, 12, 14 und 16 aus. Diese Haltekraft muss zum Verstellen des jeweiligen Verstellelements 10, 12, 14 und 16 überwunden werden.

Im Darstellungsbeispiel weist jedes Halteelement 36 eine gezahnte Oberfläche 38 auf, welche die Zahnung der gezahnten Oberfläche 28 des Verriegelungselements 20, 22, 24 im Bereich der Unterbrechung fortsetzt und einem Abschnitt der gezahnten Oberfläche 26 des jeweiligen Verstellelements 10, 12, 14 und 16 gegenüberliegt. Die gezahnte Oberfläche 38 des Halteelements 36 befindet sich auch in der Entriegelungsposition des jeweiligen Verstellelements 10,12, 14 und 16 mit dessen gezahnter Oberfläche 26 in Eingriff, weil die Federn 40 die Halteelemente 36 zu den zugeordneten Verstellelementen 10,12, 14 16 hin drücken. Auf diese Weise üben die Halteelemente 36 eine Haltekraft auf die Verstellelemente 10, 12, 14 und 16 aus. Zur Verstellung jeweiligen Verstellelements 10, 12, 14 und 16 muss dieses in seiner Verstellrichtung X mit einer Kraft bewegt werden, die groß genug ist, um die schrägen Flanken der Zähne der gezahnten Oberflächen 38 und 26 aneinander abgleiten zu lassen und so die Haltekraft der Halteelemente 36 zu überwinden.

Die gezahnte Oberfläche 26 des Verstellelements 10 drückt beim Verschieben in Verstellrichtung X durch die schrägen Zahnflanken die gezahnte Oberfläche 38 des Halteelements 36 in Richtung der Federn 40, so dass die Federn 40 komprimiert werden (s. Fig. 3). Hierdurch bewirkt das Halteelement 36 einerseits, dass das Verstellelement 10 durch die Kräfte der Federn 40 gegen den Quersteg 54 des Kraftübertragungselements 30 gedrückt wird. Auch in der Entriegelungsposition können sich die Verstellelemente 10, 12, 14, 16 nicht frei bewegen, sondern befinden sich durch die Federkraft in definierter Anlage gegen das Kraftübertragungselement 30. Dadurch wird auch eine freie Bewegung des Kraftübertragungselements 30 unterbunden. Die Verstellvorrichtung klappert und rappelt folglich nicht in der Entriegelungsposition, weil alle beweglichen Teile gegeneinander gedrückt werden. Zum anderen definiert die Zahnung festgelegte Inkremente, in denen die Verstellbewegung erfolgen kann. Die minimale Verstellbewegung jedes Verstellelements 10, 12, 14,15 entspricht der Zahnteilung bzw. dem Abstand zweier Zahnspitzen der gezahnten Oberfläche 26.

Die gezahnten Halteelemente 36 sind so ausgebildet, dass sie die Verstellelemente 10, 12, 14, und 16 in der Entriegelungsposition in einer Position entlang der Verstellrichtung X fixiert, in der auch eine Arretierung des jeweiligen Verstellelements 10, 12, 14 und 16 durch das jeweils zugeordneten Verriegelungselement 20, 22 und 24 erfolgen kann. Dies wird dadurch realisiert, dass die gezahnte Oberfläche 38 des Halteelements 36 hinsichtlich des Abstands und der Position der Zähne entlang der Verstellrichtung X auf die entsprechende gezahnte Oberfläche 28 abgestimmt ist bzw. den Verlauf der gezahnten Oberfläche 28 fortsetzt. Die Haltepositionen des Halteelements 36 entsprechen somit den Verriegelungspositionen der jeweils zugeordneten Verriegelungselemente 20, 22 und 24.

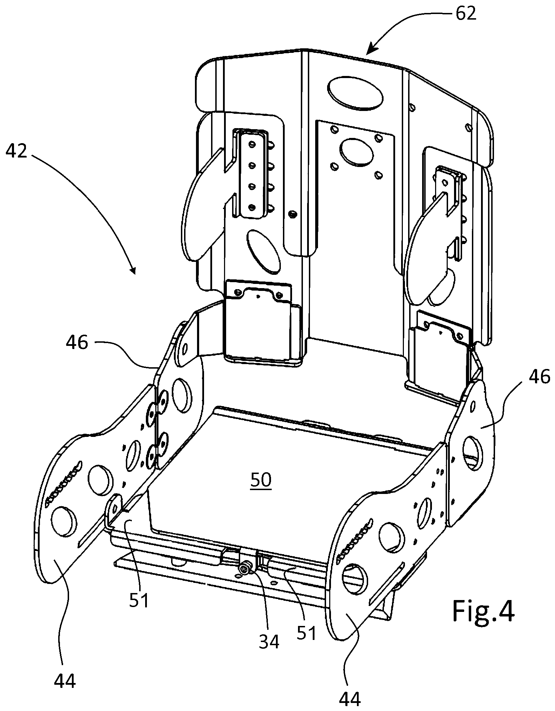

Die erfindungsgemäße Vorrichtung kann - wie im Darstellungsbeispiel gezeigt - Bestandteil einer Sitzschale 42 sein. Eine solche Sitzschale 42 ist in Fig. 4 beispielhaft dargestellt. Im Darstellungsbeispiel dient die erfindungsgemäße Vorrichtung dem Verstellen seitlicher Führungselemente 44 und 46. An jeder Seite der Sitzschale 42 sind in Längsrichtung der Sitzfläche ein vorderes Führungselement 44 und ein hinteres Führungselement 46 angeordnet, welche gelenkig miteinander verbunden sind, so dass sie um eine vertikale Achse zueinander verschwenkt werden können. Die zwei vorderen Führungselemente 44 sind mit den vorderen Verstellelementen 14 und 16 gekoppelt, wogegen die hinteren Führungselemente 46 mit den hinteren Verstellelementen 10 und 12 gekoppelt sind. Die seitlichen Führungselemente 44, 46 dienen der seitlichen Stützung bzw. Führung einer in der dargestellten Sitzschale 42 sitzenden Person. Insbesondere Personen mit Fehlstellungen der Gelenke und Gliedmaßen bedürfen einer besonders präzisen individuellen Anpassung von Sitzschalen, damit sie über lange Zeiträume bequem und ohne Komplikationen sitzen können. Bei bekannten Sitzschalen ist es erforderlich, dass ein Orthopädietechniker die Verriegelungen für jedes der vier Führungselemente 44, 46 individuell löst, das Führungselement 44, 46 auf die gewünschte Position einstellt und dann wieder verriegelt. Dieser Vorgang ist bei bekannten Sitzschalen nur bei leerer Sitzschale möglich, damit die verschiedenen Verriegelungen frei zugänglich sind. Die Person, auf die die bekannte Sitzschale eingestellt wird, muss dabei oft mehrfach in der Sitzschale Platz nehmen und diese wieder verlassen.

In Fig. 4 ist zu erkennen, dass die zentrale Betätigungsschraube 34 einfach durch einen Orthopädietechniker durch die Beine einer in der Sitzschale 42 sitzenden Person hindurch betätigt werden kann. Die Person kann in der Sitzschale Platz nehmen, wobei die Führungselemente 44, 46 in ihre äußerste Position verschoben sind. Anschließend können bei gelöster Verriegelung die Führungselemente gegen den Körper der aufgenommenen Person gedrückt werden. Wenn die optimalen Einstellpositionen gefunden wurden, kann durch anziehen der zentralen Betätigungsschraube 34 eine Verriegelung aller Verstellelemente 10, 12, 14, 16 und damit aller Führungselemente 44, 46 bewirkt werden. Dabei müssen die Führungselemente 44, 46 nicht manuell in der optimalen Position fixiert werden. Durch die Halteelemente 36 ist sichergestellt, dass die Führungselemente 44, 46 die eingestellte optimale Position nicht verlassen.

Alternativ und/oder zusätzlich kann die erfindungsgemäße Vorrichtung auch zur Verstellung anderer Elemente der Sitzschale 42 dienen. Zum Beispiel sind im Bereich der Rückenlehne 62 der Sitzschale 42 seitliche Träger für Polster zu erkennen, die verschiebbar sind und durch eine ähnliche Verriegelungsvorrichtung arretiert werden können. Auch können mehr oder weniger als 4 Verstellelemente 10, 12, 14 und 16 mit der hier beschriebenen Vorrichtung arretiert werden.

Die Sitzschale kann - wie im dargestellten Ausführungsbeispiel gezeigt - eine Auflageplatte 50 aufweisen, welche auf den Verriegelungselementen 20, 22, 24 aufliegt. Die Halteelemente 36, Verstellelemente 10, 12, 14, 16 und das Kraftübertragungselement 30 weisen eine etwas geringere Dicke auf, als die Verriegelungselemente 20, 22, 24, so dass sie unter der Auflageplatte 50 frei verschiebbar sind. Auf der Auflageplatte 50 wird eine Sitzpolsterung (nicht dargestellt) angebracht. Sie nimmt die Gewichtskraft der sitzenden Person auf. Die Gewichtskraft wird daher nicht in die unter der Auflageplatte 50 angeordneten beweglichen Elemente der Verriegelungsvorrichtung eingeleitet.

Die Basisplatte 48 schirmt die Verriegelungsvorrichtung von unten und die Auflageplatte 50 in Verbindung mit den seitlichen Zwischenplatten schirmt die Verriegelungsvorrichtung von oben ab. Basisplatte 48 und Auflageplatte 50 werden durch die Verriegelungselemente 20, 22 und 24 auf einem Abstand zueinander gehalten, der größer als die Höhe der beweglichen Verstellelemente 10, 12, 14 und 16, des Kraftübertragungselements 30 und der Halteelemente 36 ist.

Die Einstellung der hinteren Führungselementen 46 über die zugeordneten hinteren Verstellelemente 10, 12 legt die Breite der Sitzschale im Hüftbereich der aufgenommenen Person fest. Die vorderen Verstellelemente 14, 16 sind bei der in Fig. 4 dargestellten Einstellung derart eingestellt, dass die vorderen Führungselemente 44 sich in gerader Verlängerung der hinteren Führungselemente 46 erstrecken. Die Fig. 4 zeigt eine Sitzschale 42, bei der die Führungselementen 44, 46 auf den minimalen Abstand zueinander eingestellt sind. Der Abstand zwischen den Führungselementen 44, 46 entspricht im Wesentlichen der Breite der Auflageplatte 50. Die vorderen Verstellelemente 14 bzw. 16 auf beiden Seiten der Sitzschale sind auf die gleiche Breite, d.h. den gleichen Abstand von der Mitte der Sitzschale, eingestellt, wie die hinteren Verstellelemente 10 bzw. 12, so dass auf beiden Seiten die zwei Führungselemente 44, 46 in einer Ebene parallel zur vertikalen Mittelebene der Sitzschale verlaufen.

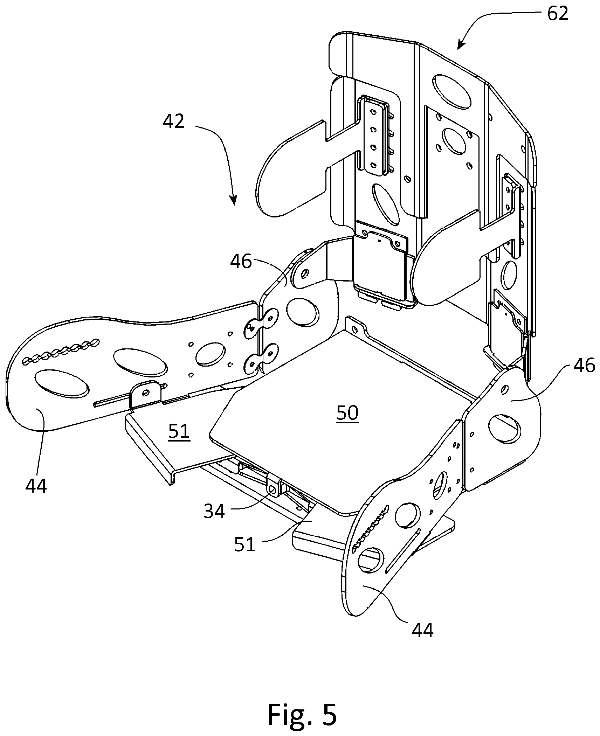

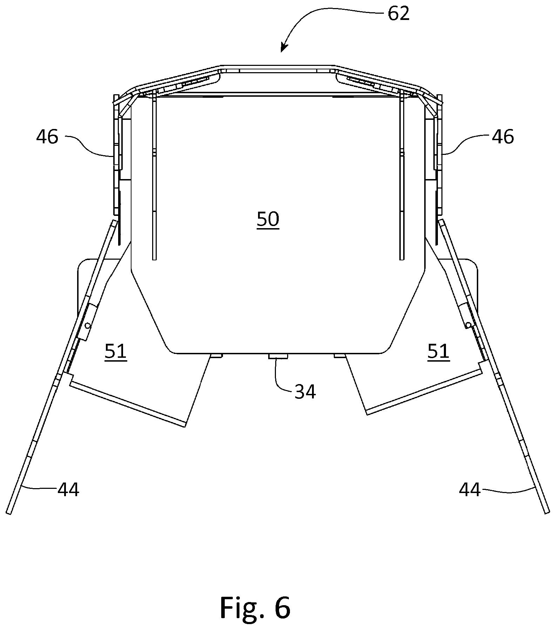

Wie oben erläutert, können die vorderen Führungselemente 44 seitlich in Bezug auf die hinteren Führungselemente 46 verschwenkt werden. Eine derartige Einstellung ist in den Fig. 5 und 6 zu erkennen. Wenn die vorderen Verstellelemente 14, 16 auf einer Seite der Sitzschale 42 auf einen anderen Abstand von der Mitte der Sitzschale 42 eingestellt als die hinteren Verstellelemente 10 oder 12, dann verschwenken die zwei Führungselemente 44 und 46 auf dieser Seite zueinander um eine vertikale Schwenkachse, die in dem Spalt zwischen den zwei Führungselementen 44 und 46 verläuft. So lässt sich die Sitzschale 42 präzise auf die Abduktion, das heißt die Abspreizung, der Oberschenkel der in der Sitzschale aufzunehmenden Person einstellen. In den Fig. 5 und 6 sind die beiden vorderen Führungselemente 44 auf beiden Seiten der Auflageplatte um das gleiche Maß seitlich verstellt, so dass eine große Abspreizung der Oberschenkel eingestellt ist.

Um zu vermeiden, dass bei diesem Verschwenken ein unzulässig großer Spalt zwischen den vorderen seitlichen Führungselementen 44 und der Auflageplatte 50 entsteht, ist an jedem vorderen seitlichen Führungselemente 44 eine Zwischenplatte 51 verschiebbar befestigt, die sich im Wesentlichen parallel zur Auflageplatte 50 erstreckt und direkt unterhalb der Auflageplatte 50 verläuft. Diese Zwischenplatte 51 füllt den seitlichen Bereich neben und vor der Auflageplatte 50, wenn die vorderen Führungselement 44 seitlich heraus geschwenkt sind.

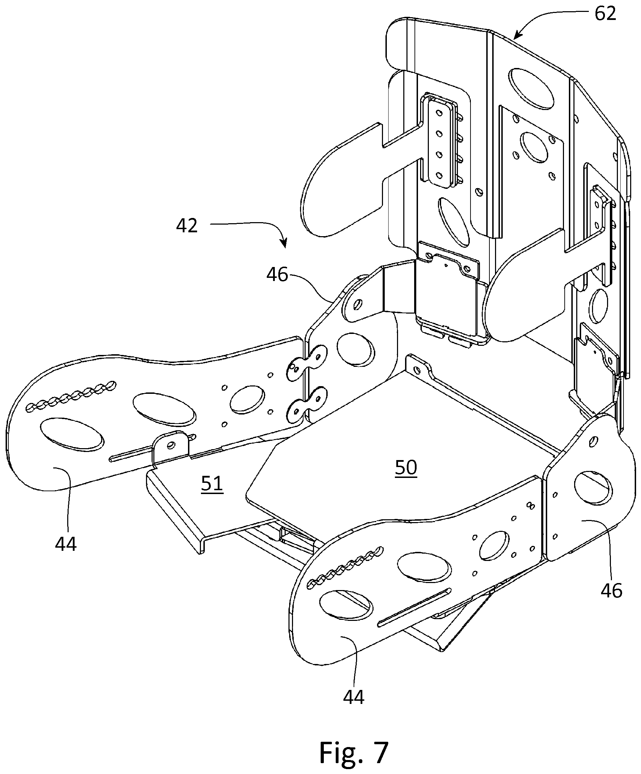

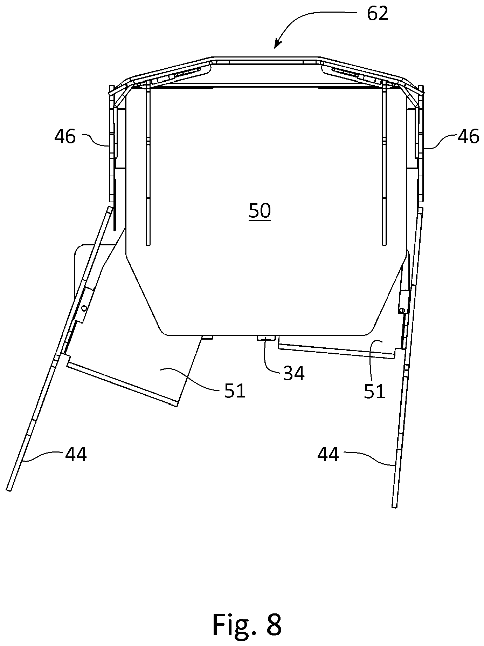

In den Fig. 7 und 8 ist das vordere Führungselement 44 auf der rechten Seite der Fig. 8 im Vergleich zum hinteren Führungselement 46 nach innen, d.h. zur Mitte der Auflageplatte 50 hin verschwenkt. Hierdurch wird der gegen das vordere Führungselement 46 anliegende Oberschenkel der aufgenommenen Person nach innen abgespreizt. Auf der linken Seite in Fig. 8 ist das vordere Führungselement 44 dagegen nach außen und von der Auflageplatte 50 weg gespreizt, so dass die Führungselemente 44, 46 auf beiden Seiten asymmetrisch verlaufen. Es ist erkennbar, dass mit dem hier beschriebenen Verstellmechanismus auf einfache Weise eine Vielzahl möglicher Fehlstellungen der Beine der aufgenommenen Person einstellbar ist. Eine leicht asymmetrische Einstellung der hinteren Führungselementen 46 über die zugeordneten hinteren Verstellelemente 10, 12 kann gewählt werden, wenn das Steißbein der aufgenommenen Person in Bezug auf die Körpermitte seitlich verlagert ist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Verstellelement
- 12: Verstellelement
- 14: Verstellelement
- 16: Verstellelement
- 18: Gleitelement
- 20: Verriegelungselement
- 22: Verriegelungselement
- 24: Verriegelungselement
- 26: gezahnte Oberfläche
- 28: gezahnte Oberfläche
- 30: Kraftübertragungselement
- 32: Gewinde
- 34: Betätigungsschraube
- 36: Halteelement
- 38: gezahnte Oberfläche
- 40: Feder
- 42: Sitzschale
- 44: vorderes seitliches Führungselement
- 46: hinteres seitliches Führungselement
- 48: Basisplatte
- 50: Auflageplatte
- 51: Zwischenplatte
- 52: Längssteg
- 54: Quersteg
- 56: Quersteg
- 58: Quersteg
- 60: Quersteg
- 62: Rückenlehne

- X: Verstellrichtung
- Y: Verriegelungsrichtung

## Patentansprüche

1. Vorrichtung mit mehreren beweglichen Verstellelementen (10, 12, 14, 16), welche separat voneinander verstellbar und jeweils in einer gewünschten Position arretierbar sind, wobei jedem Verstellelement (10, 12, 14, 16) mindestens ein Verriegelungselement (20, 22, 24) zugeordnet ist, **dadurch gekennzeichnet, dass** Verstellelement (10, 12, 14, 16) und zugeordnetes Verriegelungselement (20, 22, 24) einander gegenüberliegende gezahnte Oberflächen (26, 28) aufweisen, wobei das Verstellelement (10, 12, 14, 16) und das Verriegelungselement (20, 22, 24) relativ zueinander bewegbar sind von einer Verriegelungsposition, in der die gezahnten Oberflächen (26, 28) gegeneinander anliegen, in eine Entriegelungsposition, in der die gezahnten Oberflächen (26, 28) einen Abstand zueinander aufweisen, und wobei ein Kraftübertragungselement (30) vorgesehen ist, welches die Relativbewegung zwischen allen Verstellelementen (10, 12, 14, 16) und den zugeordneten Verriegelungselementen (20, 22, 24) bewirkt, und wobei die Vorrichtung mindestens ein Halteelement (36) aufweist, das mindestens einem Verstellelement (10, 12, 14, 16) zugeordnet ist und in der Entriegelungsposition auf das zugeordnete Verstellelement (10, 12, 14, 16) eine Haltekraft ausübt, die zum Verstellen des Verstellelements (10, 12, 14, 16) überwunden werden muss.

2. Vorrichtung nach Anspruch 1, **dadurch gekennzeichnet, dass** das Kraftübertragungselement (30) ein Gewinde (32) aufweist, mit dem seine Position verstellbar ist.

3. Vorrichtung nach Anspruch 1 oder 2, **dadurch gekennzeichnet, dass** jedes Halteelement (36) eine gezahnte Oberfläche (38) aufweist, die einem Abschnitt der gezahnten Oberfläche (26) des zugeordneten Verstellelements (10, 12, 14, 16) gegenüberliegt.

4. Vorrichtung nach Anspruch 3, **dadurch gekennzeichnet, dass** jedes Halteelement (36) an dem Verriegelungselement (20, 22, 24) gegen die Kraft einer Feder (40) verschiebbar befestigt ist.

5. Vorrichtung nach einem der vorangehenden Ansprüche, **dadurch gekennzeichnet, dass** sie Bestandteil einer Sitzschale (42) ist und an jedem Verstellelement (10, 12, 14, 16) ein seitliches Führungselement (44,46) für eine in der Sitzschale (42) aufgenommene Person befestigt ist.

6. Vorrichtung nach Anspruch 5, **dadurch gekennzeichnet, dass** die Sitzschale (42) vier Verstellelemente (10, 12, 14, 16) aufweist.

7. Vorrichtung nach Anspruch 5 oder 6, **dadurch gekennzeichnet, dass** die Sitzschale (42) eine Auflageplatte (50) für die Sitzpolsterung aufweist, unter der mindestens eins der folgenden Elemente angeordnet ist:
• mindestens ein Verstellelement (10, 12, 14, 16),
• mindestens ein Verriegelungselement (20, 22, 24),
• mindestens ein Halteelement (36),
• mindestens eine Feder (40)
• mindestens eine Zwischenplatte (51).

8. Vorrichtung nach Anspruch 7, **dadurch gekennzeichnet, dass** unter der Auflageplatte (50) mindestens eine der folgenden Elementegruppen angeordnet ist:
• alle Verstellelemente (10, 12, 14, 16),
• alle Verriegelungselemente (20, 22, 24),
• alle Halteelemente (36),
• alle Federn (40).

9. Vorrichtung nach einem der Ansprüche 5 bis 8, **dadurch gekennzeichnet, dass** die Sitzschale (42) eine Basisplatte (48) aufweist, an der alle Verriegelungselemente (20, 22, 24) befestigt sind.

10. Vorrichtung nach Anspruch 7 oder 8, **dadurch gekennzeichnet, dass** zwischen Verstellelement (10, 12, 14, 16) und Auflageplatte (50) ein Gleitelement (18) angeordnet ist.

## Claims

1. Device with a plurality of movable adjustment elements (10, 12, 14, 16) which can be adjusted separately from one another and can each be locked in a desired position, each adjustment element (10, 12, 14, 16) being assigned at least one locking element (20, 22, 24), **characterized in that** the adjustment element (10, 12, 14, 16) and associated locking element (20, 22, 24) have opposing toothed surfaces (26, 28), the adjustment element (10, 12, 14, 16) and the locking element (20, 22, 24) being movable relative to one another from a locking position, in which the toothed surfaces (26, 28) rest against one another, into an unlocking position in which the toothed surfaces (26, 28) are at a distance from each other, and wherein a force transmission element (30) is provided which effects the relative movement between all the adjustment elements (10, 12, 14, 16) and the associated locking elements (20, 22, 24), and wherein the device comprises at least one retaining element (36) which is associated with at least one adjustment element (10, 12, 14, 16) and, in the unlocked position, exerts a retaining force on the associated adjustment element (10, 12, 14, 16) which must be overcome in order to adjust the adjustment element (10, 12, 14, 16).

2. Device according to claim 1, **characterised in that** the force transmission element (30) has a thread (32) with which its position can be adjusted.

3. Device according to claim 1 or 2, **characterized in that** each retaining element (36) has a toothed surface (38) facing a portion of the toothed surface (26) of the associated adjustment element (10, 12, 14, 16).

4. Device according to claim 3, **characterized in that** each retaining element (36) is slidably attached to the locking element (20, 22, 24) against the force of a spring (40).

5. Device according to one of the preceding claims, **characterised in that** it is part of a seat shell (42) and a lateral guide element (44, 46) for a person accommodated in the seat shell (42) is attached to each adjustment element (10, 12, 14, 16).

6. Device according to claim 5, **characterised in that** the seat shell (42) has four adjustment elements (10, 12, 14, 16).

7. Device according to claim 5 or 6, **characterized in that** the seat shell (42) comprises a support plate (50) for the seat upholstery, under which at least one of the following elements is arranged:
• at least one adjustment element (10, 12, 14, 16),
• at least one locking element (20, 22, 24),
• at least one retaining element (36),
• at least one spring (40)
• at least one intermediate plate (51).

8. Device according to claim 7, **characterised in that** at least one of the following groups of elements is arranged under the support plate (50):
• all adjustment elements (10, 12, 14, 16),
• all locking elements (20, 22, 24),
• all retaining elements (36),
• all springs (40).

9. Device according to any one of claims 5 to 8, **characterised in that** the seat shell (42) comprises a base plate (48) to which all locking elements (20, 22, 24) are attached.

10. Device according to one of claims 7 or 8, **characterised in that** a sliding element (18) is arranged between the adjustment element (10, 12, 14, 16) and the support plate (50).

## Revendications

1. Dispositif comprenant plusieurs éléments de réglage mobiles (10, 12, 14, 16), qui peuvent être réglés séparément les uns des autres et bloqués chacun dans une position souhaitée, au moins un élément de verrouillage (20, 22, 24) étant associé à chaque élément de réglage (10, 12, 14, 16), **caractérisé en ce que** l'élément de réglage (10, 12, 14, 16) et l'élément de verrouillage associé (20, 22, 24) comprennent des surfaces dentées (26, 28) en regard l'une de l'autre, l'élément de réglage (10, 12, 14, 16) et l'élément de verrouillage (20, 22, 24) pouvant être déplacés l'un par rapport à l'autre d'une position de verrouillage, dans laquelle les surfaces dentées (26, 28) sont appliquées l'une contre l'autre, dans une position de déverrouillage dans laquelle les surfaces dentées (26, 28) présentent un écart l'une par rapport à l'autre, et un élément de transmission de force (30) étant prévu, lequel provoque le mouvement relatif entre tous les éléments de réglage (10, 12, 14, 16) et les éléments de verrouillage (20, 22, 24) associés, et le dispositif comprenant au moins un élément de retenue (36) qui est associé à au moins un élément de réglage (10, 12, 14, 16) et qui, dans la position de déverrouillage, exerce sur l'élément de réglage associé (10, 12, 14, 16) une force de retenue qui doit être surmontée pour le réglage de l'élément de réglage (10, 12, 14, 16).

2. Dispositif selon la revendication 1, **caractérisé en ce que** l'élément de transmission de force (30) comprend un filetage (32) permettant de régler sa position.

3. Dispositif selon la revendication 1 ou 2, **caractérisé en ce que** chaque élément de retenue (36) comprend une surface dentée (38) en regard d'une portion de la surface dentée (26) de l'élément de réglage associé (10, 12, 14, 16).

4. Dispositif selon la revendication 3, **caractérisé en ce que** chaque élément de retenue (36) est fixé à l'élément de verrouillage (20, 22, 24) de manière à pouvoir coulisser contre la force d'un ressort (40).

5. Dispositif selon l'une des revendications précédentes, **caractérisé en ce qu'**il fait partie d'une coque de siège (42) et **en ce qu'**à chaque élément de réglage (10, 12, 14, 16) est fixé un élément de guidage latéral (44, 46) pour une personne logée dans la coque de siège (42).

6. Dispositif selon la revendication 5, **caractérisé en ce que** la coque de siège (42) comprend quatre éléments de réglage (10, 12, 14, 16).

7. Dispositif selon la revendication 5 ou 6, **caractérisé en ce que** la coque de siège (42) comprend une plaque d'appui (50) pour le rembourrage du siège, sous laquelle est disposé au moins un des éléments suivants :
• au moins un élément de réglage (10, 12, 14, 16),
• au moins un élément de verrouillage (20, 22, 24),
• au moins un élément de maintien (36),
• au moins un ressort (40)
• au moins une plaque intermédiaire (51).

8. Dispositif selon la revendication 7, **caractérisé en ce qu'**au moins l'un des groupes d'éléments suivants est disposé sous la plaque d'appui (50) :
• tous les éléments de réglage (10, 12, 14, 16),
• tous les éléments de verrouillage (20, 22, 24),
• tous les éléments de retenue (36),
• tous les ressorts (40).

9. Dispositif selon l'une des revendications 5 à 8, **caractérisé en ce que** la coque de siège (42) comprend une plaque de base (48) sur laquelle sont fixés tous les éléments de verrouillage (20, 22, 24).

10. Dispositif selon l'une des revendications 7 ou 8, **caractérisé en ce qu'**un élément de glissement (18) est disposé entre l'élément de réglage (10, 12, 14, 16) et la plaque d'appui (50).
